# EUROPÄISCHE PATENTSCHRIFT

(11) **EP 1 835 216 B1**
(45) Veröffentlichungstag und Bekanntmachung des Hinweises auf die Patenterteilung: **14.12.2011**
(21) Anmeldenummer: 06005281.8
(22) Anmeldetag: 15.03.2006
(51) Int. Cl.: F16L 9/12

(54) **Electrisch leitfähige Kraftfahrzeugrohrleitung aus Kunststoff**
Electric conductive plastic pipe for vehicle
Tuyau électriquement conducteur en plastique pour véhicule

(43) Veröffentlichungstag der Anmeldung: 19.09.2007
(73) Patentinhaber: TI Automotive (Fuldabrück) GmbH, 34277 Fuldabrück (DE)
(72) Erfinder: Dipl.-Ing. Zimmer, Werner, 34212 Melsungen (DE); Dipl.-Ing. Barthel, Iris, 34270 Schauenburg (DE); Dr. Otto, Torsten, 34292 Ahnatal (DE)
(74) Vertreter: Rohmann, Michael

(56) Entgegenhaltungen:
- WO-A-2005/047748
- DE-A1- 3 202 854
- DE-U- 7 534 723
- FR-A- 2 194 545
- US-A1- 2004 191 452

## Beschreibung

Die Erfindung betrifft eine Kraftfahrzeugrohrleitung aus Kunststoff, wobei die Innenseite der Rohrleitung zumindest bereichsweise aus elektrisch leitfähigem Kunststoff besteht, wobei zumindest ein sich lediglich über einen Teil des Umfangs der Rohrleitung erstreckender Abschnitt aus elektrisch leitfähigem Kunststoff vorgesehen ist, der an die elektrisch leitfähige Innenseite der Rohrleitung angeschlossen ist, wobei der Abschnitt in radialer Richtung in eine Schicht aus nicht leitfähigem Kunststoff hineinragt, und wobei sich der Abschnitt zumindest bereichsweise in Längsrichtung der Rohrleitung erstreckt.

Elektrisch leitfähiger Kunststoff meint insbesondere eine Kunststoffmatrix, in die elektrisch leitfähige Teilchen, beispielsweise Rußteilchen oder Kohlenstofffasern, eingebettet sind. - Eine Kraftfahrzeugrohrleitung aus Kunststoff der zuvor beschriebenen Ausgestaltung wird in der FR 2 194 545 beschrieben. Hier sind Kanäle im Inneren vorgesehen, in welche eine wässrige Dispersion von Polytetrafluorethylen mit einem hohen Gehalt an Grafit eingegossen wird. Dadurch lassen sich elektrische Ladungen ableiten. Die solchermaßen parallel zur Rohrachse verlaufenden Bänder aus leitenden Materialien weisen einen im Verhältnis zum Rohrquerschnitt kleinen Querschnitt auf.

Durch die US 2004/0191452 A1 ist einen Kraftfahrzeugrohrleitung ähnlicher Bauart bekannt geworden, bei welcher sich leitfähige und nicht leitfähigen Streifen an der Innenseite abwechsein. Dieses Dokument entspricht dem Ober-begriff des Anspruchs 1.

Die DE 75 34 723 U1 beschreibt unter anderem ein durchsichtiges Kunststoffrohr in elektrisch leitfähiger bzw. elektroantistatischer Ausführung. Dabei besteht das Rohr im Querschnitt gesehen zu einem wesentlichen Teil aus einer durchsichtigen Mischung und zum anderen Teil aus einer leitfähigen oder elektroantistatischen Mischung. Das heißt, der leitfähige Bereich ist als Rohrabschnitt ausgestaltet, welcher vom Rohräußeren bis zum Rohrinnere reicht.

Kraftfahrzeugrohrleitungen mit elektrisch leitfähigen Innenschichten sind wie beschrieben in verschiedenen Ausführungsformen bekannt. Der elektrisch leitfähige Kunststoff ist im Vergleich zu nicht leitfähigem Kunststoff ein relativ teurer Rohstoff. Im Übrigen beeinflusst der elektrisch leitfähige Kunststoff die mechanischen Eigenschaften der Rohrleitung in negativer Weise. Größere Mengen von elektrisch leitfähigem Kunststoff bzw. größere Schichtdicken mit elektrisch leitfähigem Kunststoff beeinträchtigen insbesondere die Kaltschlagzähigkeit der Rohrleitung.

In Kraftfahrzeugrohrleitungen der eingangs genannten Art werden häufig Bördel eingearbeitet. Ein Bördel entspricht einer örtlich begrenzten über den Umfang der Rohrleitung umlaufenden Aufweitung der Rohrleitung, so dass im Bereich eines Bördels sowohl Außendurchmesser als auch Innendurchmesser der Rohrleitung vergrößert ist. Solche Bördel dienen beispielsweise einer axialen Fixierung bzw. Positionierung der Rohrleitung in einem Clip am Fahrzeugchassis. Ein Bördel wird normalerweise durch Kalt- bzw. Warmverformung nach der Extrusion in die Rohrleitung eingearbeitet. Die Einarbeitung eines solchen Bördels erzeugt an der Innenseite der Rohrleitung gedehnte Bereiche. Aufgrund dieser Dehnungen vergrößern sich die Abstände der dort vorhandenen elektrisch leitfähigen Teilchen und deshalb nimmt die Leitfähigkeit des Kunststoffes in den gedehnten Bereichen ab bzw. wird sogar unterbrochen. Das ist ein unerwünschter nachteilhafter Effekt bei der Bildung von Bördeln in Kraftfahrzeugrohrleitungen.

Die Kraftfahrzeugrohrleitungen der eingangs genannten Art werden außerdem häufig durch eine Rotationsverschweißung oder Vibrationsverschweißung mit anderen Leitungselementen, beispielsweise mit einem geeigneten Endfitting verbunden. In die Verschweißung ist die Innenseite der Rohrleitung involviert und aufgrund der dabei auftretenden Abrasion an den Kontaktflächen kann insbesondere bei einer dünn ausgelegten leitfähigen Innenschicht die elektrische Leitfähigkeit in unerwünschter Weise beeinträchtigt werden.

Demgegenüber liegt der Erfindung das technische Problem zugrunde, eine Kraftfahrzeugrohrleitung der eingangs genannten Art anzugeben, bei der die vorstehend geschilderten Nachteile vermieden werden können und bei der eine ausreichende elektrische Leitfähigkeit insbesondere auch in kritischen Bereichen (Bördel, Verschweißungsstellen) langfristig gewährleistet bleibt.

Zur Lösung dieses technischen Problems wird eine Kraftfahr-zeugrohrleitung aus Kunststoff gemäss Anspruch 1 vorgeschlagen.

Kraftfahrzeugrohrleitung meint insbesondere eine Rohrleitung zum Durchleiten von Kraftstoffen. Innenseite der Rohrleitung meint im Rahmen der Erfindung die Innenoberfläche der Rohrleitung, die mit dem durchströmende fluiden Medium, insbesondere mit dem Kraftstoff in Kontakt kommt. Elektrisch leitfähiger Kunststoff meint im Rahmen der Erfindung insbesondere eine Kunststoffmatrix, in die elektrisch leitfähige Partikel eingebettet sind, beispielsweise Rußpartikel oder Kohlenstofffasern.

Dass der elektrisch leitfähige Abschnitt an die elektrisch leitfähige Innenseite der Rohrleitung angeschlossen ist meint auch, dass der elektrisch leitfähige Abschnitt selbst einen elektrisch leitfähigen Bereich an der Innenseite der Rohrleitung bilden kann. Dass der elektrische leitfähige Abschnitt in radialer Richtung teilweise in die Schicht aus nicht leitfähigem Kunststoff hineinragt, meint, dass sich der Abschnitt lediglich über einen Teil der Dicke bzw. Schichtdicke der Schicht aus dem nicht leitfähigen Kunststoff erstreckt. Mit anderen Worten durchragt der elektrisch leitfähige Abschnitt diese Schicht aus nicht leitfähigem Kunststoff nicht vollständig und in radialer Richtung ist über dem elektrisch leitfähigem Abschnitt stets noch eine Teilschicht aus nicht leitfähigem Kunststoff angeordnet. Es liegt im Rahmen der Erfindung, dass sich der elektrisch leitfähige Abschnitt über zumindest 40 %, bevorzugt über zumindest 45 % und besonders bevorzugt über zumindest 50 % der Dicke der nicht leitfähigen Kunststoffschicht erstreckt. Zweckmäßigerweise erstreckt sich der elektrisch leitfähige Abschnitt über maximal 85 %, vorzugsweise über maximal 80 %, bevorzugt über maximal 75 %, sehr bevorzugt über maximal 70 % und besonders bevorzugt über maximal 65 % der Dicke der elektrisch nicht leitfähigen Kunststoffschicht. Es liegt im Rahmen der Erfindung, dass sich der elektrisch leitfähige Abschnitt bis in den bezüglich der Wanddicke mittleren Bereich der nicht leitfähigen Kunststoffschicht erstreckt.

Bei dem Bereich der "neutralen Faser" handelt es sich um den bezüglich der Wanddicke mittleren Bereich der Rohrleitungswandung, der bei einer Biegung der Rohrleitung bzw. bei einer Bördelbildung an der Rohrleitung am geringsten von Stauchungen und Dehnungen beeinträchtigt wird. Wenn die Rohrleitung. lediglich eine Schicht umfasst, liegt die neutrale Faser in dem bezüglich der Schichtdicke mittleren Bereich dieser Schicht. Gemäß einer bevorzugten Ausführungsvariante der Erfindung beträgt der radiale Abstand des elektrisch leitfähigen Abschnittes zur neutralen Faser 0 bis 0,35 mm, vorzugsweise 0 bis 0,3 mm, bevorzugt 0 bis 0,25 mm und sehr bevorzugt 0 bis 0,2 mm.

Erfindungsgemäß erstreckt sich der elektrisch leitfähige Abschnitt lediglich über einen Teil des Umfangs bzw. Innenumfangs der Rohrleitung. Es liegt im Rahmen der Erfindung, dass sich der elektrisch leitfähige Abschnitt über maximal 30 %, vorzugsweise über maximal 20 %, bevorzugt über maximal 15%, sehr bevorzugt über maximal 10 % und besonders bevorzugt über maximal 5 % des Umfangs bzw. Innenumfangs der Rohrleitung erstreckt. - Der elektrisch leitfähige Abschnitt hat zweckmäßigerweise einen rechteckförmigen, trapezförmigen, runden oder halbrunden Querschnitt.

Es liegt fernerhin im Rahmen der Erfindung, dass die erfindungsgemäße Kraftfahrzeugrohrleitung eine mehrschichtige Rohrleitung ist. Mit anderen Worten können an die Schicht aus nicht leitfähigem Kunststoff weitere Schichten bzw. Kunststoffschichten anschließen.

Nach einer besonders bevorzugten Ausführungsform der Erfindung bildet der zumindest eine elektrisch leitfähige Abschnitt den elektrisch leitfähigen Bereich der Innenseite der Rohrleitung und der übrige Bereich der Innenseite der Rohrleitung besteht aus elektrisch nicht leitfähigem Kunststoff. Bei dieser Ausführungsform der erfindungsgemäßen Kraftfahrzeugrohrleitung ist also eine Innenschicht aus nicht leitfähigem Kunststoff vorgesehen, die den Großteil der Innenseite der Rohrleitung bildet. Zumindest ein elektrisch leitfähiger Abschnitt erstreckt sich lediglich über einen Teilbereich des Umfangs der Rohrleitung und ragt in die nicht leitfähige Innenschicht hinein. Grundsätzlich können mehrere elektrisch leitfähige Abschnitte vorgesehen sein, die in die Innenschicht hineinragen und sich entlang der Längsrichtung der Rohrleitung erstrecken. Nach besonders bevorzugter Ausführungsform der Erfindung ist aber lediglich ein einziger elektrisch leitfähiger Abschnitt vorgesehen, der nur teilweise in die nicht leitfähige Kunststoffschicht hineinragt.

Nach einer anderen sehr bevorzugten Ausführungsform der Erfindung besteht die Innenschicht der Rohrleitung aus leitfähigem Kunststoff und an die Außenseite dieser leitfähigen Innenschicht schließt eine Schicht aus nicht leitfähigem Kunststoff an. Der Abschnitt aus dem leitfähigen Kunststoff ist bei dieser Ausführungsform an die leitfähige Innenschicht angeschlossen und ragt teilweise in die nicht leitfähige Kunststoffschicht hinein. Es liegt im Rahmen der Erfindung, dass sich die leitfähige Innenschicht über den gesamten Umfang bzw. über den gesamten Innenumfang der Kraftfahrzeugrohrleitung erstreckt. Es liegt fernerhin im Rahmen der Erfindung, dass der Abschnitt aus dem leitfähigen Kunststoff einstückig an die elektrisch leitfähige Innenschicht angeschlossen ist und teilweise in die nicht leitfähige Kunststoffschicht hineinragt. Dabei besteht der elektrisch leitfähige Abschnitt zweckmäßigerweise aus dem gleichen Material wie die elektrisch leitfähige Innenschicht. Vorzugsweise beträgt die radiale Dicke d des elektrisch leitfähigen Abschnitts mehr als die Hälfte, bevorzugt mehr als zwei Drittel und sehr bevorzugt mehr als drei Viertel der radialen Dicke der elektrisch leitfähigen Innenschicht. Nach einer Ausführungsform ist die radiale Dicke d des elektrisch leitfähigen Abschnitts größer als die radiale Dicke der elektrisch leitfähigen Innenschicht. An die elektrisch nicht leitfähige Kunststoffschicht können in radialer Richtung nach außen weitere Schichten bzw. Kunststoffschichten anschließen. In die Kunststoffmatrix der elektrisch leitfähigen Innenschicht und die Kunststoffmatrix des elektrisch leitfähigen Abschnittes sind Leitfähigkeitszusätze, insbesondere Rußteilchen eingebettet.

Es liegt im Rahmen der Erfindung, dass der elektrisch leitfähige Abschnitt eine radiale Dicke d von zumindest 0,2 mm, vorzugsweise von zumindest 0,25 mm, bevorzugt von zumindest 0,3 mm und sehr bevorzugt von zumindest 0,35 mm aufweist. - Gemäß einer Ausführungsvariante beträgt die radiale Dicke d des elektrisch leitfähigen Abschnittes zumindest 20 % vorzugsweise zumindest 25 %, bevorzugt zumindest 30 % und sehr bevorzugt zumindest 35 % der Gesamtwandstärke der Kraftfahrzeugrohrleitung.

Nach einer besonders bevorzugten Ausführungsform der Erfindung erstreckt sich der elektrisch leitfähige Abschnitt an einem Bördel der Rohrleitung in Längsrichtung der Rohrleitung. Bördel meint im Rahmen der Erfindung eine örtliche Aufweitung der Wandung der Kraftfahrzeugrohrleitung, die sich insbesondere über den gesamten Umfang der Rohrleitung erstreckt. Wie oben bereits erläutert, wird bei der Herstellung eines solchen Bördels die Innenseite der Rohrleitungswandung gedehnt und dadurch haben die elektrisch leitfähigen Teilchen einen größeren Abstand voneinander, so dass bei den aus dem Stand der Technik bekannten Rohrleitungen häufig die elektrische Leitfähigkeit nicht mehr gewährleistet ist. Der Erfindung liegt die Erkenntnis zugrunde, dass durch den erfindungsgemäßen elektrisch leitfähigen Abschnitt auch in weniger gedehnten Bereichen der Rohrleitungswandung, insbesondere im Bereich der Wandmitte der Rohrleitungswandung elektrisch leitfähiges Material vorhanden ist, das eine optimale elektrische Leitfähigkeit der Rohrleitung gewährleistet.

Nach einer weiteren besonders bevorzugten Ausführungsform der Erfindung erstreckt sich der elektrisch leitfähige Abschnitt in einem Reibschweißbereich der Rohrleitung in Längsrichtung der Rohrleitung. Es handelt sich bei dem Reibschweißbereich insbesondere um ein Ende der Rohrleitung, das über eine Rotationsschweißung oder Vibrationsschweißung mit einem weiteren Rohrleitungselement, insbesondere mit einem Fitting verbunden werden soll. Der Erfindung liegt hier die Erkenntnis zugrunde, dass aufgrund des erfindungsgemäßen elektrisch leitfähigen Abschnitts auch nach der Verschweißung und der damit verbundenen Abrasion der Kunststoffoberflächen noch ausreichend elektrisch leitfähiges Material vorhanden ist, das eine optimale elektrische Leitfähigkeit der Rohrleitung gewährleistet. Es liegt im Rahmen der Erfindung, dass der elektrisch leitfähige Abschnitt ausschließlich aus einem Material besteht bzw. im Wesentlichen ausschließlich aus einem Material besteht, das an einer Reibschweißverbindung teilnehmen kann. Es handelt sich dabei zweckmäßigerweise um eine entsprechende Kunststoffmatrix, in der leitfähige Partikel, insbesondere Kohlenstoffpartikel oder Kohlenstofffasern verteilt sind. Bei der Ausführungsform, bei der der elektrisch leitfähige Abschnitt einen elektrisch leitfähigen Bereich der Innenseite der Rohrleitung bildet, ist zweckmäßigerweise die radiale Dicke d des elektrisch leitfähigen Abschnittes größer als die radiale Dicke der inneren Schicht der Rohrleitung, die bei einem Reibschweißvorgang durch Abrasion entfernt wird. Bei der Ausführungsform mit der elektrisch leitfähigen Innenschicht ist vorzugsweise die Summe aus der radialen Dicke der elektrisch leitfähigen Innenschicht und aus der radialen Dicke d des elektrisch leitfähigen Abschnittes größer als die radiale Dicke der inneren Schicht der Rohrleitung, die bei einem Reibschweißvorgang durch Abrasion entfernt wird.

Der Erfindung liegt die Erkenntnis zugrunde, dass mit der erfindungsgemäß ausgestalteten Kraftfahrzeugrohrleitung stets eine ausreichende elektrische Leitfähigkeit der Rohrleitung gewährleistet ist. Das gilt auch für Stellen, an denen ein Bördel in die Kraftfahrzeugrohrleitung eingearbeitet wird oder für Bereiche der Kraftfahrzeugrohrleitung, die einer Rotationsschweißung oder Vibrationsschweißung unterzogen werden. Nichtsdestoweniger kann die erfindungsgemäße Kraftfahrzeugrohrleitung auf einfache und kostengünstige Weise hergestellt werden. Der Erfindung liegt insoweit die Erkenntnis zugrunde, dass aufgrund der erfindungsgemäßen Ausgestaltung der Kraftfahrzeugrohrleitung lediglich eine relativ geringe Menge an elektrisch leitfähigem Kunststoff eingesetzt werden muss und dass nichtsdestoweniger die elektrische Leitfähigkeit auch in kritischen Bereichen langfristig gewährleistet bleibt. Dadurch kann in vorteilhafter Weise teurer Rohstoff eingespart werden. Die erfindungsgemäße Kraftfahrzeugrohrleitung zeichnet sich im Vergleich zu aus dem Stand der Technik bekannten elektrisch leitfähigen Rohrleitungen auch durch hervorragende mechanische Eigenschaften aus. So weist die erfindungsgemäße Rohrleitung eine bessere Kaltschlagzähigkeit als viele andere bekannte Rohrleitungen auf.

Nachfolgend wird die Erfindung anhand einer lediglich ein Ausführungsbeispiel darstellenden Zeichnung näher erläutert. Es zeigen in schematischer Darstellung:
Fig. 1 eine Kraftfahrzeugrohrleitung mit einem Bördel,
Fig. 2 vergrößerte Ausschnitte aus der Kraftfahrzeugrohrleitungswandung a) vor der Herstellung des Bördels und b) nach der Herstellung des Bördels,
Fig. 3 einen Querschnitt durch eine erfindungsgemäße Kraftfahrzeugrohrleitung in einer ersten Ausführungsform und
Fig. 4 den Gegenstand nach Fig. 3 in einer zweiten Ausführungsform.

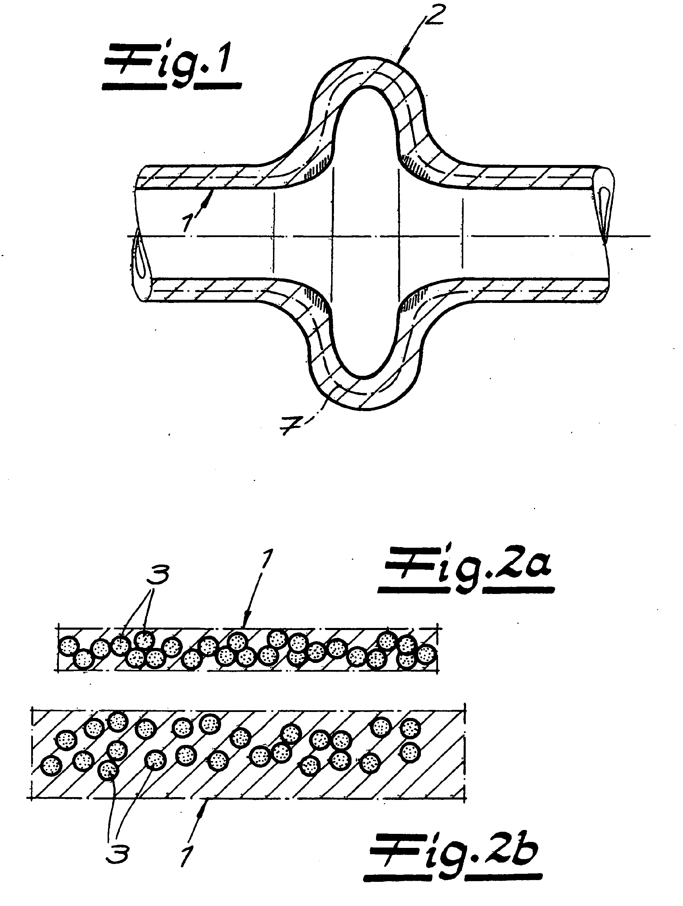

In Fig. 1 ist ein Abschnitt einer Kraftfahrzeugrohrleitung aus Kunststoff dargestellt, deren Innenseite 1 aus elektrisch leitfähigem Kunststoff besteht. An dieser Kraftfahrzeugrohrleitung wurde ein Bördel 2 erzeugt, indem die Wandung der Kraftfahrzeugrohrleitung nach außen aufgeweitet wurde. Die Fig. 2a und 2b zeigen vergrößerte Ausschnitte der Innenseite 1 bzw. der Innenwandung der Kraftfahrzeugrohrleitung. In den Kunststoff der Innenwandung sind hier elektrisch leitfähige Teilchen 3 eingebettet. Der vergrößerte Ausschnitt in Fig. 2a zeigt den Zustand der Innenwandung vor der Herstellung des Bördels 2. Hier haben die elektrisch leitfähigen Teilchen 3 lediglich einen geringen Abstand voneinander, so dass die elektrische Leitfähigkeit gewährleistet ist. Die Fig. 2b zeigt den Zustand gemäß Fig. 1 nach Herstellung des Bördels 2. Der in Fig. 2b dargestellte Bereich der Innenwandung entspricht den in Fig. 1 schraffiert gekennzeichneten Bereichen der Innenwandung. Aufgrund der Herstellung des Bördels 2 erfolgte hier eine Dehnung von Kunststoffbereichen der Innenwandung, so dass die elektrisch leitfähigen Teilchen einen relativ großen Abstand zueinander aufweisen und deshalb eine ausreichende elektrische Leitfähigkeit nicht immer gewährleistet ist. In der Fig. 1 ist im Übrigen im Bereich der Wandmitte der Rohrleitung die neutrale Faser 7 strichpunktiert angedeutet worden. Dabei handelt es sich um den bezüglich der Wanddicke mittigen Bereich der Rohrwandung, der bei der Herstellung des Bördels 2 keine Dehnungen oder Stauchungen erfährt.

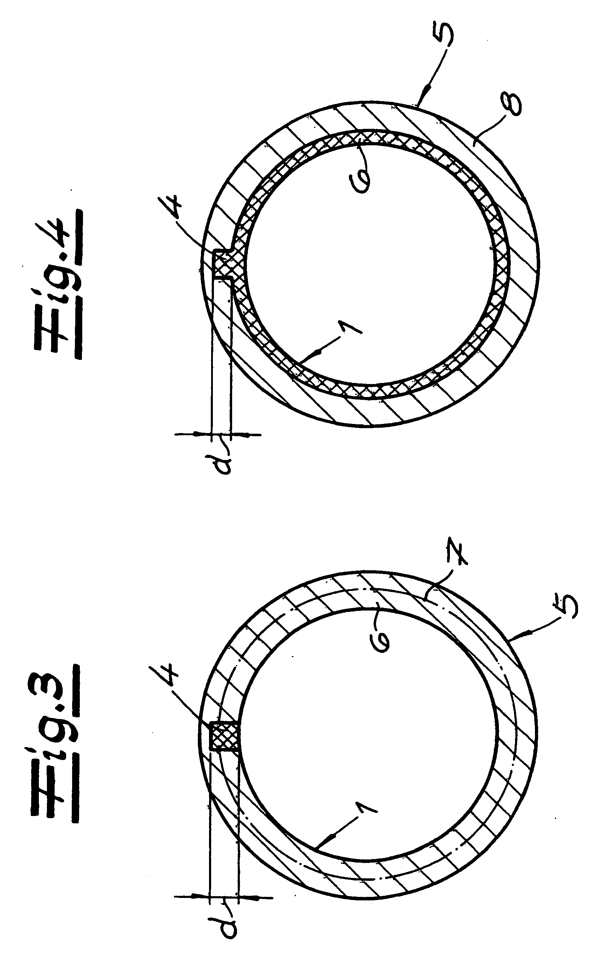

Die Fig. 3 und 4 zeigen zwei Ausführungsformen der erfindungsgemäßen Kraftfahrzeugrohrleitung im Querschnitt. Im Ausführungsbeispiel nach Fig. 3 ist ein elektrisch leitfähiger Abschnitt 4 vorgesehen, der den elektrisch leitfähigen Bereich der Innenseite 1 der Rohrleitung bildet. Der elektrisch leitfähige Abschnitt 4 besteht aus einer Kunststoffmatrix, in der elektrisch leitfähige Teilchen 3 verteilt eingebettet sind. Der übrige Bereich der Innenseite 1 der Rohrleitung besteht aus elektrisch nicht leitfähigem Kunststoff 5. Bei dieser Ausführungsform ist also eine Innenschicht 6 aus nicht leitfähigem Kunststoff 5 vorgesehen, die den Großteil der Innenseite 1 der Rohrleitung bildet. Der elektrisch leitfähige Abschnitt 4 ragt in diese Innenschicht 6 hinein, wobei erfindungsgemäß der elektrisch leitfähige Abschnitt 4 sich lediglich über einen Teil der Dicke der Innenschicht 6 erstreckt. Es liegt im Rahmen der Erfindung, dass sich der elektrisch leitfähige Abschnitt 4 zumindest bis in den Bereich der neutralen Faser 7 erstreckt. Wie oben bereits dargelegt liegt die neutrale Faser 7 im Bereich der Wandungsmitte der Innenschicht 6, wenn die Rohrleitung lediglich diese Innenschicht 6 als einzige Schicht aufweist. Wenn es sich bei der Rohrleitung um einen Schichtverbund aus mehreren Schichten handelt, liegt die neutrale Faser 7 im bezüglich der Gesamtwandstärke mittleren Bereich der Rohrleitungswandung. Nach einer Ausführungsvariante mit entsprechender Schichtdickenausgestaltung liegt die neutrale Faser 7 dann ebenfalls in der nicht leitfähigen Innenschicht 6.

Im Ausführungsbeispiel nach Fig. 4 besteht die Innenschicht 6 der Rohrleitung aus elektrisch leitfähigem Kunststoff. An diese leitfähige Innenschicht 6 schließt eine weitere Schicht 8 aus elektrisch nicht leitfähigem Kunststoff 5 an. Der elektrisch leitfähige Abschnitt 4 ist hier mit der leitfähigen Innenschicht 6 einstückig verbunden und ragt in die elektrisch nicht leitfähige Schicht 8 hinein. Dabei ragt der elektrisch leitfähige Abschnitt 4 zweckmäßigerweise zumindest bis in den bezüglich der Schichtdicke mittigen Bereich der Schicht 8.

Vorzugsweise erstreckt sich der elektrisch leitfähige Abschnitt 4 über zumindest 40 %, bevorzugt über zumindest 45 % und sehr bevorzugt über zumindest 50 % der Schichtdicke der Schicht 8. - Es liegt im Rahmen der Erfindung, dass der elektrisch leitfähige Abschnitt 4 bis in die Nähe, bevorzugt bis in den Bereich der neutralen Faser 7 der Rohrwandung ragt. Wenn die Rohrwandung lediglich ein Schichtverbund aus der elektrisch leitfähigen Innenschicht 6 und der weiteren Schicht 8 aus elektrisch nicht leitfähigem Kunststoff ist, liegt die neutrale Faser im bezüglich der Gesamtwandstärke mittleren Bereich dieses Schichtverbundes. Wenn noch weitere Schichten an die Schicht 8 anschließen, liegt die neutrale Faser 7 im bezüglich der Gesamtwandstärke mittleren Bereich dieses Schichtenaggregates. Nach einer Ausführungsvariante mit entsprechender Schichtdickenausgestaltung liegt die neutrale Faser 7 für die vorgenanten Fälle in der Schicht 8 aus elektrisch nicht leitfähigem Kunststoff 5.

Wenn die Kraftfahrzeugrohrleitung im Bereich eines Bördels 2 wie in den Fig. 3 oder 4 ausgebildet ist, ergeben sich nicht die bei den bekannten Kraftfahrzeugrohrleitungen auftretenden Nachteile. Vielmehr bleibt trotz Herstellung eines Bördels 2 die elektrische Leitfähigkeit der erfindungsgemäßen Kraftfahrzeugrohrleitung ausreichend gewährleistet. Im Übrigen wird eine erfindungsgemäße Kraftfahrzeugrohrleitung insbesondere auch in einem Reibschweißbereich entsprechend den Ausführungsformen in den Fig. 3 und 4 ausgelegt. Trotz der Reibschweißung und der damit verbundenen Oberflächenabrasion kann bei der erfindungsgemäßen Kraftfahrzeugrohrleitung nichtsdestoweniger eine ausreichende Leitfähigkeit der Rohrleitung aufrechterhalten werden.

## Patentansprüche

1. Kraftfahrzeugrohrleitung aus Kunststoff, wobei die Innenseite (1) der Rohrleitung zumindest bereichsweise aus elektrisch leitfähigem Kunststoff besteht, wobei zumindest ein sich lediglich über einen Teil des Umfangs der Rohrleitung erstreckender Abschnitt (4) aus elektrisch leitfähigem Kunststoff vorgesehen ist,
wobei der Abschnitt (4) in radialer Richtung in eine Schicht aus nicht leitfähigem Kunststoff (5) hineinragt,
wobei sich der Abschnitt (4) zumindest bereichsweise in Längsrichtung der Rohrleitung erstreckt,
wobei der Abschnitt (4) an die elektrisch leitfähige Innenseite (1) der Rohrleitung angeschlossen ist,
wobei sich der Abschnitt (4) lediglich über einen Teil der Dicke bzw. Schichtdicke der Schicht aus dem nicht leitfähigen Kunststoff erstreckt,
wobei der elektrisch leitfähige Kunststoff eine Kunststoffmatrix ist, in die elektrisch leitfähige Partikel eingebettet sind und wobei die Kunststoffmatrix des elektrisch leitfähigen Abschnitts (4) aus einem Fluorpolymer oder aus einem Polyamid besteht, wobei das Fluorpolymer ETFE oder PVdF ist,
**dadurch gekennzeichnet,**
**dass** sich der elektrisch leitfähige Abschnitt (4) zumindest bis in einen Bereich der neutralen Faser (7) der Rohrleitungswandung erstreckt.

2. Kraftfahrzeugrohrleitung nach Anspruch 1, wobei der zumindest eine elektrisch leitfähige Abschnitt (4) den elektrisch leitfähigen Bereich der Innenseite (1) der Rohrleitung bildet und wobei der übrige Bereich der Innenseite (1) der Rohrleitung aus elektrisch nicht leitfähigem Kunststoff (5) besteht.

3. Kraftfahrzeugrohrleitung nach Anspruch 1, wobei die Innenschicht (6) der Rohrleitung aus leitfähigem Kunststoff besteht, wobei an die leitfähige Innenschicht (6) eine Schicht aus nicht leitfähigem Kunststoff (5) anschließt und wobei der Abschnitt (4) aus leitfähigem Kunststoff an die leitfähige Innenschicht angeschlossen ist und in die nicht leitfähige Kunststoffschicht hineinragt.

4. Kraftfahrzeugrohrleitung nach einem der Ansprüche 1 bis 3, wobei der elektrisch leitfähige Abschnitt (4) eine radiale Dicke d von zumindest 0,2 mm, vorzugsweise von zumindest 0,25 mm und sehr bevorzugt von zumindest 0,3 mm aufweist.

5. Kraftfahrzeugrohrleitung nach einem der Ansprüche 1 bis 4, wobei die radiale Dicke d des elektrisch leitfähigen Abschnitts (4) zumindest 20 %, vorzugsweise zumindest 25 %, bevorzugt zumindest 30 % und sehr bevorzugt zumindest 35 % der Gesamtwandstärke der Kraftfahrzeugrohrleitung beträgt.

6. Kraftfahrzeugrohrleitung nach einem der Ansprüche 1 bis 5, wobei sich der elektrisch leitfähige Abschnitt (4) im Bereich eines Bördels (2) der Rohrleitung in Längsrichtung der Rohrleitung erstreckt.

7. Kraftfahrzeugrohrleitung nach einem der Ansprüche 1 bis 6, wobei sich der elektrisch leitfähige Abschnitt (4) in einem Reibschweißbereich der Rohrleitung in Längsrichtung der Rohrleitung erstreckt.

## Claims

1. A motor vehicle tubing made of plastic, wherein the inner side (1) of the tubing consists at least partially of electrically conductive plastic,
wherein at least one section (4) of electrically conductive plastic is provided extending only over a portion of the periphery of the tubing,
wherein the section (4) projects in radial direction into a layer of non-conductive plastic (5),
wherein the section (4) extends at least partially in longitudinal direction of the tubing,
wherein the section (4) is connected to the electrically conductive inner side (1) of the tubing,
wherein the section (4) extends only over a portion of the thickness or respectively layer thickness of the layer of the non-conductive plastic,
wherein the electrically conductive plastic is a plastic matrix, into which electrically conductive particles are embedded and
wherein the plastic matrix of the electrically conductive section (4) consists of a fluoropolymer or of a polyamide, wherein the fluoropolymer is ETFE or PVDF,
**characterized in that**
the electrically conductive section (4) extends at least into a region of the neutral fibre (7) of the tubing wall.

2. The motor vehicle tubing according to Claim 1, wherein the at least one electrically conductive section (4) forms the electrically conductive region of the inner side (1) of the tubing and wherein the remaining region of the inner side (1) of the tubing consists of electrically non-conductive plastic (5).

3. The motor vehicle tubing according to Claim 1, wherein the inner layer (6) of the tubing consists of conductive plastic, wherein a layer of non-conductive plastic (5) adjoins the conductive inner layer (6) and wherein the section (4) of conductive plastic is connected to the conductive inner layer and projects into the non-conductive plastic layer.

4. The motor vehicle tubing according to one of Claims 1 to 3, wherein the electrically conductive section (4) has a radial thickness d of at least 0.2 mm, advantageously of at least 0.25 mm and very preferably of at least 0.3 mm.

5. The motor vehicle tubing according to one of Claims 1 to 4, wherein the radial thickness d of the electrically conductive section (4) is at least 20 %, advantageously at least 25 %, preferably at least 30 % and very preferably at least 35 % of the total wall thickness of the motor vehicle tubing.

6. The motor vehicle tubing according to one of Claims 1 to 5, wherein the electrically conductive section (4) extends in the region of a flange (2) of the tubing in longitudinal direction of the tubing.

7. The motor vehicle tubing according to one of Claims 1 to 6, wherein the electrically conductive section (4) extends in a friction welding region of the tubing in longitudinal direction of the tubing.

## Revendications

1. Tuyauterie de véhicule automobile en plastique, dans laquelle le côté intérieur (1) de la tuyauterie est constitué au moins sur des portions d'un plastique électriquement conducteur,
dans laquelle au moins une portion (4) s'étendant uniquement sur une partie de la circonférence de la tuyauterie, constituée d'un plastique électriquement conducteur est prévue,
dans laquelle la portion (4) dépasse dans la direction radiale dans une couche de plastique (5) non conducteur,
dans laquelle la portion (4) s'étend au moins sur des portions dans la direction longitudinale de la tuyauterie,
dans laquelle la portion (4) est raccordée au côté intérieur (1) électriquement conducteur de la tuyauterie,
dans laquelle la portion (4) s'étend uniquement sur une partie de l'épaisseur, resp. l'épaisseur de couche de la couche en plastique non conducteur,
dans laquelle le plastique électriquement conducteur est une matrice plastique, dans laquelle les particules électriquement conductrices sont incorporées et
dans laquelle la matrice plastique de la portion (4) électriquement conductrice est constituée d'une fluoropolymère ou d'un polyamide, dans laquelle le fluoropolymère est de l'ETFE ou PVdF.
**caractérisée en ce que** la portion (4) électriquement conductrice s'étend au moins jusque dans une zone de la fibre neutre (7) de la paroi de tuyauterie.

2. Tuyauterie de véhicule automobile selon la revendication 1, dans laquelle la au moins une portion (4) électriquement conductrice forme la zone électriquement conductrice du côté intérieur (1) de la tuyauterie et dans laquelle la zone restante du côté intérieur (1) de la tuyauterie est constituée d'un plastique (5) électriquement non conducteur.

3. Tuyauterie de véhicule automobile selon la revendication 1, dans laquelle la couche interne (6) de la tuyauterie est constituée d'un plastique conducteur, dans laquelle à la couche interne conductrice (6) se rattache une couche de plastique (5) non conducteur et dans laquelle la portion (4) en plastique conducteur est rattachée à la couche interne conductrice et dépasse dans la couche plastique non conductrice.

4. Tuyauterie de véhicule selon une des revendications 1 à 3, dans laquelle la portion électriquement conductrice (4) présente une épaisseur radiale d d'au moins 0,2mm, de préférence d'au moins 0,25mm et de manière préférée d'au oins 0,3mm.

5. Tuyauterie de véhicule automobile selon une des revendications 1 à 4, dans laquelle l'épaisseur radiale d de la portion électriquement conductrice (4) correspond au moins à 20%, de préférence au moins 25%, de préférence au moins 30% et de manière très préférée au moins 35% de l'épaisseur de paroi totale de la tuyauterie de véhicule automobile.

6. Tuyauterie de véhicule automobile selon une des revendications 1 à 5, dans laquelle la portion électriquement conductrice (4) s'étend au niveau d'un bord relevé (5) de la tuyauterie dans la direction longitudinale de la tuyauterie.

7. Tuyauterie de véhicule selon une des revendications 1 à 6, dans laquelle la portion électriquement conductrice (4) s'étend dans une zone de soudage par friction de la tuyauterie dans la direction longitudinale de la tuyauterie.
